Europäisches Patentamt

European Patent Office

Office européen des brevets

(19)

(11) Veröffentlichungsnummer: **0 204 889**
**B1**

(12) **EUROPÄISCHE PATENTSCHRIFT**

(45) Veröffentlichungstag der Patentschrift: **17.10.90**

(21) Anmeldenummer: **86102316.6**

(22) Anmeldetag: **22.02.86**

(51) Int. Cl.⁵: **B 25 B 27/02, B 23 P 19/02**

(54) **Absturzsicherung in Kombination mit einer Vorrichtung zum Ausziehen eines Rohres aus einem Rohrboden eines Wärmetauschers.**

(30) Priorität: **14.06.85 DE 3521355**

(43) Veröffentlichungstag der Anmeldung:
**17.12.86 Patentblatt 86/51**

(45) Bekanntmachung des Hinweises auf die
Patenterteilung:
**17.10.90 Patentblatt 90/42**

(84) Benannte Vertragsstaaten:
**BE CH DE FR IT LI NL SE**

(56) Entgegenhaltungen:
**EP-A-0 004 275**
**FR-A-2 384 594**
**GB-A-2 045 122**
**US-A-4 369 569**

(73) Patentinhaber: **ABB Reaktor GmbH**
**Dudenstrasse 44**
**D-6800 Mannheim 1 (DE)**

(72) Erfinder: **Haller, Hans, Dipl.-Ing.(FH)**
**Am Sonnengarten 5**
**D-6800 Mannheim 1 (DE)**

(74) Vertreter: **Rupprecht, Klaus, Dipl.-Ing. et al**
**c/o BBC Brown Boveri Aktiengesellschaft ZPT**
**Postfach 100351 Kallstadter Strasse 1**
**D-6800 Mannheim 1 (DE)**

Courier Press, Leamington Spa, England.

EP 0 204 889 B1

**Beschreibung**

Die Erfindung betrifft eine Absturzsieherung in kombination mit einer Vorrichtung zum Ausziehen eines Rohres aus einem Rohrboden eines Wärmetauschers, wobei die in einer Kammer des Wärmetauschers angeordnete Vorrichtung einen Hohlkolbenzylinder aufweist, dessen Hohlkolben während des Ziehvorganges als stationäre Abstützung gegenüber dem Rohrboden dient und wobei eine eine Ziehkralle tragende Zugstange zusammen mit dem Mantel des Hohlkolbenzylinders bewegbar ist.

Für eine derartige aus der FR—A—2 384 594 bekannte Vorrichtung wurde seither keine Absturzsicherung vorgesehen, da die unter einer ständigen Vorspannung stehende Ziehkralle einen Absturz verhindern soll. Wird jedoch vor Beginn des Ziehvorganges das auszuziehende Rohr mit einem Innenschneider in leichte ausziehbare Teilstücke von beispielsweise 500 mm getrennt, so ist zum Schluß des Ziehvorganges der Zeitpunk zu dem die Haftkraft des auszuziehenden Rohrstückes im Rohrboden aus Eigengewicht der Rohrziehvorrichtung nicht mehr hält, schwierig abzuschätzen. Zumindest für den letzten Abschnitte des Ziehvorganges ist daher eine Absturzsicherung vorzusehen. Ein möglicher Absturz der Ausziehvorrichtung ist jedoch aus sicherheitstechnischen Überlegungen in Erwängung zu ziehen.

Es ist daher die Aufgabe der Erfindung, eine Vorrichtung der eingangs genannten Art anzugeben, die sowohl während ihres Stillstandes als auch während ihrer Auf- und Abbewegung gegen Absturz gesichert ist.

Gelöst wird diese Aufgabe erfindungsgemäß dadurch, daß achsparallel zum Hohlkolbenzylinder der Vorrichtung in der Kammer ein relativ zum Rohrboden festgelegter kolbenstangenloser Zylinder angeordnet ist, daß etwa rechtwinklig zur Achse des kolbenstangenlosen Zylinders eine von dessen Kolben auskragende Konsole vorgesehen ist, auf der die Vorrichtung abgestützt ist wobei der Hohlkolbenzylinder auf der Konsole eingehängt ist und daß die Stützkraft des kolbenstangenlosen Zylinders derart regelbar ist, daß sie in jeder Position der Ausziehvorrichtung lediglich deren Eigengewicht kompensiert. Durch die ständig in Richtung Rohrboden wirkende Gegenkraft wird die Ausziehvorrichtung zuverlässig gesichert. Die in jeder Betriebsphase auf das Eigengewicht der Ausziehvorrichtung beschränkte Gegenkraft stellt sicher, daß die Rohrziehkräfte der Vorrichtung nicht auf die Absturzsicherung wirken.

Gemäß einer bevorzugten Ausgestaltung ist dem Hohlkolbenzylinder der Vorrichtung eine mit zwei Abstützelementen und einer Prismenführung ausgestattete Manschette zugeordnet. Dabei trägt die Absturzsicherung über die Abstützelemente, die Vorrichtung und die Prismenführung dient als Verbindungsglied zu einem Manipulator mit dessen Hilfe die Vorrichtung in die Konsole eingehängt wird.

Zwischen der Manschette und dem Hohlkolbenzylinder der Vorrichtung besteht eine Klemmverbindung. Diese Verbindung ist leicht zu lösen und erfordert keine zusätzlichen Halteelemente an dem Hohlkolbenzylinder.

Vorzugsweise besteht die Manschette aus zwei über Schraubverbindungen relativ zueinander bewegbaren Hälften wobei die Abstützelemente jeweils von beiden Hälften getragen und nach dem Festklemmen der Manschette justierbar sind.

Zur Steuerung der Einrichtung ist vorgesehen daß eine in einen unteren Zylinderraum des kolbenstangenlosen Zylinders mündende Steuerleitung mit einem Nebenstrang verbindbar ist, daß das im Nebenstrang strömende Steurmedium auf einen das Eigengewicht der Vorrichtung kompensierenden Druck gedrosselt ist und daß in Durchflußrichtung betrachtet hinter dem Drosselventil ein Druckschaltventil an den Nebenstrang angeschlossen ist, das den durch die Rohrausziehbewegung erzeugten Kompressionsdruck in dem unteren Zylinderraum auf den gedrosselten Druckwert reduziert. Ohne Zuschalten des Nebenstranges läßt sich die Vorrichtung mit dem parallel zu ihr erstreckten kolbenstangenlosen Zylinder in die Ziehposition bringen oder aus der Ziehposition entfernen. Durch Zuschalten des Nebenstranges wird während dem Ziehvorgang gewährleistet, daß stets ein das Eigengewicht der Vorrichtung kompensierendes Luftpolster im unteren Zylinderraum aufrecht erhalten ist und das sich im unteren Zylinderraum kein diesen Kompensationsdruck übersteigender Kompressionsdruck aufbauen kann.

Anhand eines Ausführungsbeispieles und der Figuren 1 bis 5 wird die erfindungsgemäße einrichtung beschrieben.

Dabie zeigen die

Figure 1 einen Teilschnitt durch eine Kammer eines Wärmetauschers mit einer darin angeordneten Vorrichtung zum Ausziehen von Rohren und einer Absturzsicherung,

Figur 2 einen Teilbereich der Fig. 1 in einem größeren Maßstab,

Figur 3 eine Ansicht der Absturzsicherung in Pfeilrichtung III der Fig. 2,

Figur 4 eine Aufsicht einer Manschette zum Halten der Vorrichtung in Pfeilrichtung IV der Fig. 2,

Figur 5 eine Schaltungsanordnung zur Steuerung der Absturzsicherung.

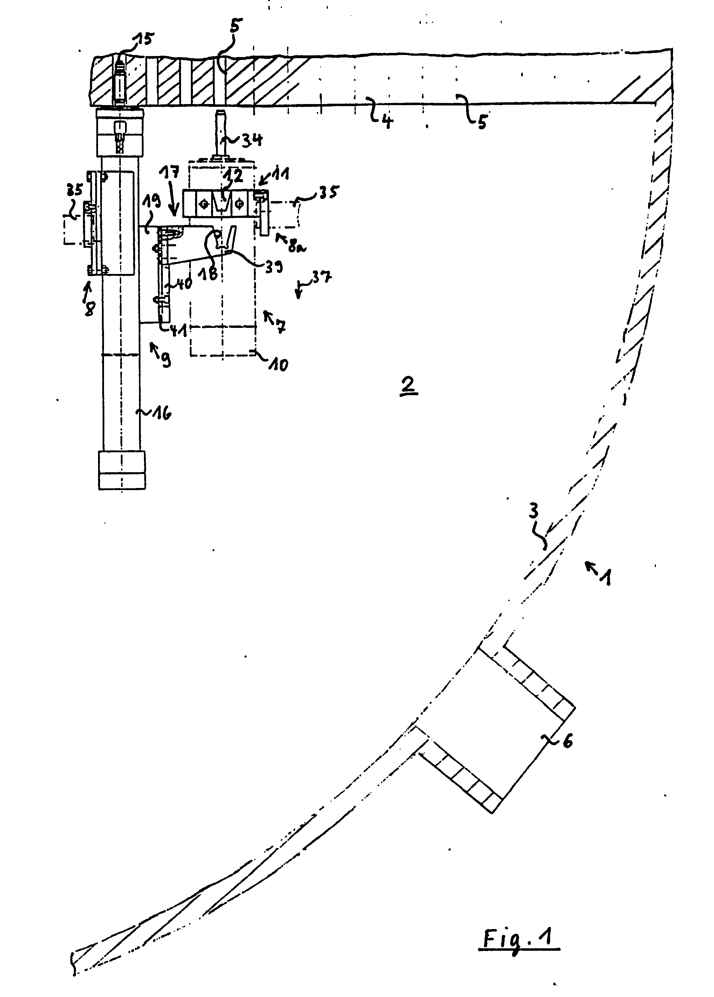

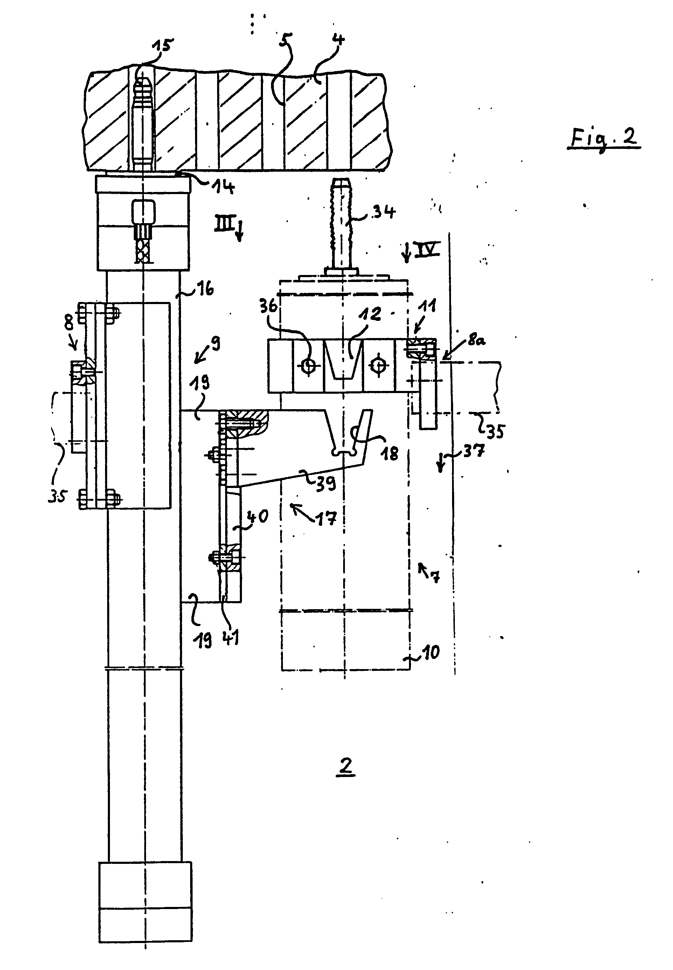

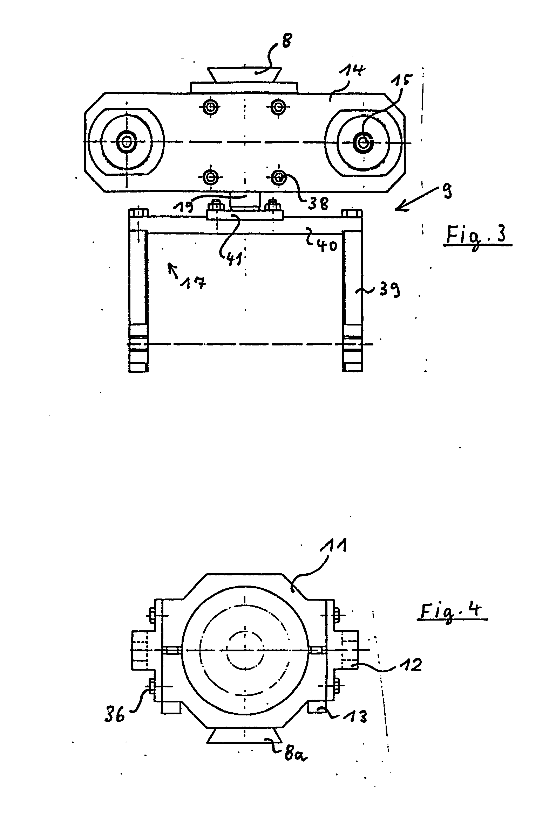

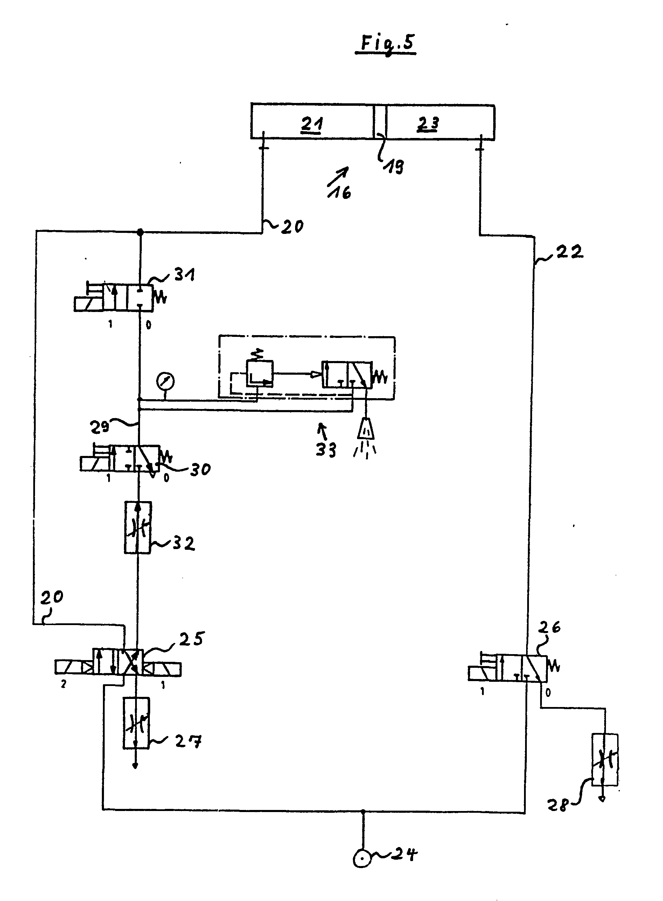

Die Fig. 1 zeigt den Teilbereich eines zur Dampferzeugung insbesondere in Kernkraftwerken vorgesehenen Wärmetauschers 1. Eine zur Einleitung bzw. Abführung des Primärkühlmittels vorgesehene Kammer 2 wird durch einen halbkugelförmigen Boden 3 und einen Rohrboden 4, in den eine Vielzahl von Rohren 5 enden, begrenzt. Zur Gewährleistung einer übersichtlichen Darstellung sind nur wenige der ca. 4000 in Rohrboden endenden Rohre angedeutet. Zur Vermeidung einer Strahlengefährdung müssen Reparatur- oder Inspektionseinrichtungen möglichst fernbedient durch ein Mannloch 6 in die Kammer 2 eingebracht un dort gehandhabt werden. Dies trifft auch für eine Vorrichtung 7 zum Ausziehen von Rohren 5 aus dem Rohrboden 4 zu. Ein bereits in der Kammer 2 befindlicher mit 35 angedeuteter Manipulator greift über eine Prismenführung 8, deren ineinander greifende Teile einerseits mit der Absturzsicherung 9 verschraubt und andererseits mit dem Manipulator 35 verbunden sind, eine in der Figur 2 in einem größeren Maßstab dargestellte Absturzsicherung 9 und bringt sie derart relativ zum Rohrboden in Position, daß zwei an einer Halteplatte 14 befestigte Spreizfinger 15 in Rohre 5 eingreifen und dort arretiert werden. Die Halteplatte 14 trägt weiterhin über Schrauben 38 (Fig. 3) einen kolbenstangenlosen Zylinder 16, von dessen Kolben 19 eine aus zwei Holmen 39 und einer Verbindungslasche 40 bestehende Konsole 17 auskragt. Die Konsole 17 ist über ihre Verbindungslasche 40 mit einer Anschlagplatte 41 des Kolbens 19 verschraubt. Einem als Hohlkolbenzylinder ausgebildeten hydraulischen Zylinder 10 der Vorrichtung 7 ist eine insbesondere in der Fig. 4 dargestellter Manschette 11 zugeordnet, die neben einer Prismenführung 8a zwei Abstützelemente 12 aufweist. Über zwei Schrauben 13 sind die zwei Hälften der Manschette 11 relativ zueinander bewegbar und können eine zuverlässige Klemmverbindung mit der Vorrichtung 7 eingehen. Nachdem die Klemmverbindung hergestellt ist werden mit Hilfe der Schrauben 36 die Abstützelemente 12 derart mit der Manschette 11 verbunden, daß ein Abstützelement von beiden Hälften der Manschette getragen wird. Die Durchtrittsöffnungen für die Schrauben 36 sind als Langlöcher ausgebildet, so daß eine Justierung der Abstützelemente 12 möglich ist. Durch Angreifen an der Prismenführung 8a übergibt der Manipulator 35 die Vorrichtung 7 an die Absturzsicherung 9. Sobald die Vorrichtung 7 über die keilförmig ausgebildeten Abstützelemente 12 in ebenso ausgebildete Aussparungen 18 der Konsole 17 eingehängt ist, ist die Aufgabe des Manipulators abgeschlossen. Aus Gründen der besseren Übersicht ist in der Fig. 2 die Vorrichtung 7 während ihrer Absenkbewegung in Pfeilrichtung 37, also vor dem Aufsetzen der keilförmig ausgebildeten Abstützelemente 12 in den keilförmig ausgebildeten Aussparungen 18 der Konsole 17 dargestellt. Der parallel zur Vorrichtung 7 angeordnete kolbenstangenlose Zylinder 16 wird nunmehr so weit in Richtung Rohrboden 4 verfahren, bis die Ziehkralle 34 der Vorrichtung 7 in ihre Arbeitsposition gelangt ist. Während der Bewegung der Vorrichtung 7 in und aus ihrer Ziehposition als auch während des eigentlichen Ziehvorganges ist die ca. 20 kg schwere Vorrichtung 7 stets gegen ein Abstürzen gesichert.

Eine Schaltungsanordnung zur Steuerung des kolbenstangenlosen Zylinders 16 Absturzsicherung 9 wird anhand der Figur 5 beschrieben. Der Kolben 19 des Zylinders 16 trennt einen mit einem Steuerstrang 20 verbundenen unteren Zylinderraum 21 von einem mit einem Steuerstrang 22 verbundenen oberen Zylinderraum 23. Diese Steuerstränge 20, 22 sind mit einem Luftanschluß 24 verbunden, der Luft mit einem Druck von ca. 6 bar einspeist. In Verbindung mit in diesen Steuersträngen eingebauten Mehrwegeventilen 25, 26 und Drosselventilen 27, 28 erlauben diese Steuerstränge ein Bewegen des Kolbens 19 und damit der über die Konsole 17 von dem Kolben 19 getragenen Vorrichtung 7 in vertikaler Richtung. Diese Bewegung ist zum Zwecke des Heranfahrens der Vorrichtung 7 in ihre bzw. des Wegfahrens derselben aus ihrer Ziehposition erforderlich.

Während des Ziehvorganges dient der kolbenstangenlose Zylinder 16 als Absturzsicherung für die ca. 20 kg schwere Vorrichtung 7. Dazu wird dem unteren Zylinderraum 21 ein Nebenstrang 29 zugeschaltet. Bei entsprechender Stellung des Mehrwegeventils 25 und bei Offenstellung der dem Nebenstrang 29 zugeordneten Mehrwegeventile 30, 31 gelangt von der Luftquelle 24 Luft mit einem Druck von 6 bar in den Nebenstrang 29. Ein in dem Nebenstrang eingebautes Drosselventil 32 reduziert den Druck soweit, daß er eine Gleichgewichtskraft zu dem Eigengewicht der Vorrichtung 7 darstellt. Bei der Ziehbewegung der Vorrichtung 7 wird der Kolben 19 zwangsläufig nach unten bewegt. Damit sich im unteren Zylinderraum 21 kein Kompressionsdruch aufbauen kann, was letztendlich einer Übertragung der Ziehkraft auf die Spreizfinger-Befestigung des Zylinders 16 bedeuten würde ist oberhalb des Drosselventils 32 ein Druckschaltventil 33 an den Nebenstrang 29 angeschlossen. Steigt der Kompressionsdruck in unteren Zylinderraum 21 über den als Gleichgewichtskraft mit Hilfe Drosselventils 32 eingestellten Druck, so schaltet des Druckschaltventils 33 und läßt den Überdruck ab. Während des gesamten Ziehvorganges herrscht also in dem unteren Zylinderraum 21 stets nur ein das Eigengewicht der Vorrichtung 7 kompensierender Druck. Dieser Druck wird auch bei einem unerwünschten Lösen der Ziehkralle 34 aus einem Rohr 5 aufrechterhalten. Die Vorrichtung 7 wird somit in jeder Betriebsphase zuverlässig gegen einen Absturz gesichert ohne daß auf die Absturzsicherung 9 selbst jeweils eine größere Kraft, als sie das Eigengewicht der Vorrichtung 7 darstellt, einwirkt.

Bezugszeichenliste

| | |
|---|---|
| 1 | Wärmetauscher |
| 2 | Kammer |
| 3 | Boden |
| 4 | Rohrboden |
| 5 | Rohr |
| 6 | Mannloch |
| 7 | Vorrichtung |
| 8, 8a | Prismenführung |
| 9 | Absturzsicherung |
| 10 | Hydraulikzylinder |
| 11 | Manschette |
| 12 | Abstützelemente |

| 13, 36, 38 | Schrauben |
| 14 | Halteplatte |
| 15 | Spreizfinger |
| 16 | kolbenstangenloser Zylinder |
| 17 | Konsole |
| 18 | Aussparungen |
| 19 | Kolben |
| 20, 22 | Steuerstrang |
| 21 | unterer Zyinderraum |
| 23 | oberer Zylinderraum |
| 24 | Luftanschluß |
| 25, 26, 30, 31 | Mehrwegeventil |
| 27, 28, 32 | Drosselventil |
| 29 | Nebenstrang |
| 33 | Druckschaltventil |
| 34 | Ziehkralle |
| 35 | Manipulator |
| 37 | Pfeilrichtung |
| 39 | Holmen |
| 40 | Verbindungslasche |
| 41 | Anschlagplatte |

## Patentansprüche

1. Absturzsicherung in kombination mit einer Vorrichtung (7) zum Ausziehen eines Rohres (5) aus einem Rohrboden (4) eines Wärmetauschers (1), wobei die in einer Kammer (2) des Wärmetauschers angeordnete Vorrichtung einen Hohlkolbenzylinder (10) aufweist, dessen Hohlkolben während des Ziehvorganges als stationäre Abstützung gegenüber dem Rohrboden (4) dient und wobei eine eine Ziehkralle (34) tragende Zugstange zusammen mit dem Mantel des Hohlkolbenzylinders (10) bewegbar ist, dadurch gekennzeichnet, daß achsparallel zum Hohlkolbenzylinder (10) der Vorrichtung (7) in der Kammer (2) ein relative zum Rohrboden (4) festgelegter kolbenstangenloser Zylinder (16) angeordnet ist, daß etwa rechtwinklig zur Achse des kolbenstangenlosen Zylinders (16) eine von dessen Kolben (19) auskragende Konsole (17) vorgesehen ist, auf der die Vorrichtung (7) abgestützt ist wobei der Hohlkolbenzylinder (10) auf der Konsole (17) eingehängt ist, und daß die Stützkraft des kolbenstangenlosen Zylinders (16) derart regelbar ist, daß sie in jeder Position der Ausziehvorrichtung (7) lediglich deren Eigengewicht kompensiert.

2. Einrichtung nach Anspruch 1, dadurch gekennzeichnet, daß dem Hohlkolbenzylinder (10) der Vorrichtung (7) eine mit zwei Abstützelementen (12) und mit einer Prismenführung (8) augestattet Manschette (11) zugeordnet ist.

3. Einrichtung nach Anspruch 2, dadurch gekennzeichnet, daß zwischen der Manschette (11) und dem Hohlkolbenzylinder (10) der Vorrichtung (7) eine Klemmverbindung besteht.

4. Einrichtung nach Anspruch 1 oder 2, dadurch gekennzeichnet, daß die Manschette (11) aus zwei über eine Schraubverbindung (13) relativ zueinander bewegbaren Hälften besteht, daß die Abstützelemente (12) jeweils von beiden Hälften getragen und nach dem Festklemmen der Manschette (11) justierbar sind.

5. Einrichtung nach Anspruch 1, dadurch gekennzeichnet, daß eine in einen unteren Zylinderraum (21) des kolbenstangenlosen Zylinders (16) mündende Steuerleitung (20) mit einem Nebenstrang (29) verbindbar ist, daß das im Nebenstrang (29) strömende Steuermedium auf einen das Eigengewicht der Vorrichtung (7) kompensierenden Druck gedrosselt ist und daß in Durchflußrichtung hinter dem Drosselventil (32) ein Druckschaltventil (33) an den Nebenstrang (29) angeschlossen ist, das den durch die Rohrausziehbewegung erzeugten Kompressionsdruck in dem unteren Zylinderraum (21) auf den gedrosselten Druckwert reduziert.

## Revendications

1. Sécurite anti-chute en combinaison avec un dispositif (7) pour extraire un tube (5) d'un fond tubulaire (4) d'un échangeur de chaleur (1), le dispositif agencé dans une chambre (2) de l'échangeur de chaleur présentant un cylindre à piston creux (10), dont le piston creux sert d'appui fixe vis-à-vis du fond tubulaire (4) pendant le processus d'extraction, et une tige de traction portant une griffe de traction (34) étant mobile conjointement à l'enveloppe du cylindre à piston creux (10), caractérisée par le fait qu'un cylindre (16) sans tige de piston, immobilisé par rapport au fond tubulaire (4), est agencé dans la chambre (2), en ayant son axe parallèle au cylindre à piston creux (10) du dispositif (7), par le fait qu'il est prévu, sensiblement à angle droit par rapport à l'axe du cylindre (16) sans tige de piston, une console (17) faisant saillie en porte-à-faux sur le piston (19) de celui-ci, sur laquelle le dispositif (7), prend appui, le cylindre à piston creux (10) étant accroché à la console (17), et par le fait que la force d'appui du cylindre (16) sans tige de piston est réglable de manière à compenser uniquement le poids propre du dispositif d'extraction (7) dans chaque position de celui-ci.

2. Agencement selon revendication 1, caractérisé par le fait qu'une manchette (1) équipée de deux éléments d'appui (12) et d'un guide prismatique (8) est associée au cylindre à piston creux (10) du dispositif (7).

3. Agencement selon la revendication 2, caractérisé par le fait qu'il y a une liaison par serrage entre la manchette (11) et le piston à cylindre creux (10) du dispositif (7).

4. Agencement selon la revendication 1 ou 2, caractérisé par le fait que la manchette (11) est constituée par deux moitiés mobiles l'une part rapport à l'autre par l'intermédiaire d'une liaison par vis (13), et par le fait que les éléments d'appui (12) sont portés à chaque fois par les deux moitiés et réglables après le serrage de la manchette (11).

5. Agencement selon la revendication 1, caractérisé par le fait qu'une conduite de commande (20) débouchant dans une chambre inférieure (21) du cylindre sans tige de piston (16) peut être reliée à une voie en dérivation (29), par le fait que le fluide de commande s'écoulant dans la voie en dérivation (29) est restreint à une pression compensant le poids propre du dispositif (7), et par le fait qu'en aval de la valve de restriction (32), en considérant le sens d'écoulement, une valve manoeuvrée par pression (33) est raccordée à la voie en dérivation (29) et réduit à la valeur de pression restreinte la pression de compression engendrée dans la chambre inférieure (21) du cylindre du fait du mouvement d'extraction du tube.

## Claims

1. Drop-off preventer in combination with a device (7) for pulling a tube (5) out of a tubeplate (4) of a heat exchanger (1), the device arranged in a chamber (2) of the heat exchanger having a hollow-piston cylinder (10), whose hollow piston serves as a stationary support against the tubeplate (4) during the pulling step, and a pulling rod which carries a pulling claw (34) being movable together with the shell of the hollow-piston cylinder (10), characterized in that a cylinder (16) without a piston rod, fixed relative to the tubeplate (4), is arranged axially parallel to the hollow-piston cylinder (10) of the device (7) in the chamber (2), in that, approximately at right angles to the axis of the cylinder (16) without a piston rod, a bracket (17) projecting from the piston (19) thereof is provided, on which bracket the device (7) is supported, the hollow-piston cylinder (10) being suspended on the bracket (17), and in that the supporting force of the cylinder (16) without a piston rod is controllable in such a way that, in any position of the pulling-out device (7), it merely compensates the dead weight thereof.

2. Arrangement according to Claim 1, characterized in that a sleeve (11) fitted with two support elements (12) and with a prism guide (8) is associated with the hollow-piston cylinder (10) of the device (7).

3. Arrangement according to Claim 2, characterized in that a clamped connection exists between the sleeve (11) and the hollow-piston cylinder (10) of the device (7).

4. Arrangement according to Claim 1 or 2, characterized in that the sleeve (11) consists of two halves which are movable relative to one another via a scrwed union (13) and that the support elements (12) are each carried by both halves and are adjustable after the sleeve (11) has been clamped into place.

5. Arrangement according to Claim 1, characterized in that a control line (20), leading into a lower cylinder space (21) of the cylinder (16) without a piston rod, is connectable to a secondary train (29), in that the control medium flowing in the secondary train (29) is throttled to a pressure which compensates the dead weight of the device (7) and in that, downstream of the throttle valve (32) as viewed in the direction of flow, a pressure-switching valve (33), which reduces the compression force generated by the tube-pulling motion in the lower cylinder space (21) to the throttled pressure valve, is connected to the secondary train (29).

Fig. 1

Fig. 2

2

Fig. 3

Fig. 4

EP 0 204 889 B1

Fig.5

4